(19) Europäisches Patentamt
European Patent Office
Office européen des brevets

(11) EP 2 598 229 B1

(12) **EUROPEAN PATENT SPECIFICATION**

(45) Date of publication and mention of the grant of the patent:
**01.05.2019 Bulletin 2019/18**

(21) Application number: **11719375.5**

(22) Date of filing: **07.03.2011**

(51) Int Cl.:
***B01D 53/14*** *(2006.01)* ***B01D 53/50*** *(2006.01)*
***C01F 11/02*** *(2006.01)* ***C01F 11/06*** *(2006.01)*
***B01D 53/83*** *(2006.01)*

(86) International application number:
**PCT/IB2011/050948**

(87) International publication number:
**WO 2012/014089 (02.02.2012 Gazette 2012/05)**

(54) **DIRECT USE OF CALCIUM OXIDE (CAO) IN THE DESULPHURIZATION OF FLUE GASES IN BOILERS WITH FLUIDIZED-BED TECHNOLOGY**

DIREKTE VERWENDUNG VON CALCIUMOXID (CAO) BEI DER ENTSCHWEFELUNG VON RAUCHGASEN IN KESSELN MIT WIRBELSCHICHTTECHNOLOGIE

UTILISATION DIRECTE D’OXYDE DE CALCIUM (CAO) POUR LA DÉSULFURATION DES GAZ DE CARNEAU DE CHAUDIÈRES PAR LA TECHNOLOGIE DU LIT FLUIDISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2010 IT CA20100008**

(43) Date of publication of application:
**05.06.2013 Bulletin 2013/23**

(73) Proprietor: **Calcidrata S.p.A.**
**09123 Cagliari (IT)**

(72) Inventors:
- **MULAS, Guido**
  **I-09123 Cagliari (IT)**
- **MULAS, Aldo**
  **I-09123 Cagliari (IT)**

(74) Representative: **Valenza, Silvia et al**
**Notarbartolo & Gervasi S.p.A.**
**Corso di Porta Vittoria 9**
**20122 Milano (IT)**

(56) References cited:
**WO-A2-2009/017811** **US-A- 4 091 076**
**US-A- 4 555 392** **US-A- 4 666 690**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to the field of methods of purification of flue gases from boilers; in particular it relates to a method for the desulphurization of flue gases from steam generating boilers with fluidized-bed technology.

### PRIOR ART

Currently, during operation, calcium carbonate ($CaCO_3$) is introduced into the combustion chamber of boilers with fluidized-bed technology, for the purpose of neutralizing pollutants resulting from said combustion, with particular reference to sulphur dioxide ($SO_2$).

The $CaCO_3$ used for this purpose is obtained by quarrying and subsequent stages of grinding in suitable mills (hammer mills or ball mills, etc.) and selection (screening) of limestone, constituted essentially of calcium carbonate ($CaCO_3$), according to specific granulometric curves defined by the boiler manufacturer. $CaCO_3$ of suitable granulometry is then introduced into the combustion chamber of the fluidized-bed boiler where it is submitted to a temperature of approx. 850°C, and dissociates into calcium oxide (CaO) and carbon dioxide ($CO_2$) according to the following reaction:

$$CaCO_3 \xrightarrow[-42.5\ \text{Kcal}]{850\,°C} CaO + CO_2$$

The calcium oxide (CaO), obtained as described above, binds to the sulphur dioxide ($SO_2$) that is present in the boiler flue gases, to produce the solid compound called calcium sulphate ($CaSO_4$), according to the reaction:

$$CaO + SO_2 + 1/2\ O_2 \rightarrow CaSO_4$$

The calcium sulphate ($CaSO_4$) thus formed is then removed from the combustion chamber of the boiler together with the ash.

However, the existing method known in the prior art, which has been used for years for removing $SO_2$ from flue gases from fluidized-bed boilers, has a number of drawbacks.

The calcium carbonate ($CaCO_3$) to be fed into the combustion chamber of the fluidized-bed boiler must comply with strict granulometric curves specified by the manufacturer of said boiler, therefore in the stages of preparation thereof (grinding and granulometric selection), there is inevitably creation of processing wastes (pulverulent materials that do not comply with the specified granulometric curve), which prove difficult to use for various purposes.

The granulometric curves specified by the manufacturer of a boiler may include the presence, more or less pronounced, of $CaCO_3$ particles characterized by an average diameter of less than 45μm, which, once introduced into the boiler, are easily removed by the air flowing through the combustion chamber, and go directly into the waste ash, without making any contribution to desulphurization of the flue gases (for example: the ash resulting from combustion in fluidized-bed boilers in which $CaCO_3$ was used as desulphurizing agent usually contains up to 7 wt.% $CaCO_3$).

When introduced into a boiler, $CaCO_3$ is subjected to thermal stress by sudden exposure to high temperatures (850°C). The thermal stress causes sintering of the particles, leading to a reduction of the specific surface of the material, limiting its reactivity and therefore the capacity for exchange with the surroundings (including $SO_2$) - (for example: 20 grams of $CaCO_3$ of granulometry between 200 and 300 μm, introduced into the combustion chamber of a fluidized-bed boiler with a diameter of 40 mm, in which there is: a fluidization velocity equal to 0.75 m/s, a temperature of 850°C, a bed constituted of 150 grams of silica sand of grain size 0.9-1 mm, and a concentration of $SO_2$ at inlet equal to 1800 ppm, can have, after a time elapsed since the moment of introduction equal to 6500 seconds, a specific capacity for absorption of $SO_2$ equal to 0.08 $g(SO_2)/g(CaCO_3)$, i.e. equal to 0.125 mol $SO_2$/mol $CaCO_3$.

The CaO particles that form directly in the boiler display mechanical characteristics that are not ideal, in particular, with respect to impact strength and abrasion resistance, and their consequent comminution so that they are, in their turn, immediately removed (elutriated) from the streams present in the boiler, without reacting with the sulphur dioxide ($SO_2$), and end up in the waste ash without making any contribution to absorption of the pollutants - (for example: 20 grams of $CaCO_3$ of granulometry between 200 and 300 μm, introduced into a fluidized-bed boiler with a diameter of 40 mm, where there is: a fluidization velocity equal to 0.75 m/s, a temperature of 850°C, a bed constituted of 150 grams of silica sand of grain size 0.9-1 mm, and an inlet concentration of $SO_2$ equal to 1800 ppm, can have, after a time elapsed since the moment of introduction equal to 20 minutes, a rate of elutriation (removal by the streams present inside the boiler) of approx. 0.03 g/min).

Expenditure of thermal energy of the boiler that is not used for generating steam but for production of CaO, by the $CaCO_3$ that does not participate in removal of $SO_2$; for example: in a thermal power station, with electric power equal to 350 MWh, with a coal-fired fluidized-bed boiler, for which the annual production of ash is approx. 160 000 tonnes/year, where said ash is characterized by a CaO content of approx. 20 wt.% (average content found in analyses of the heavy ash produced in coal-fired fluidized-bed boilers), the amount of CaO is calculated to be 32 000 tonnes/year (160 000 tonnes/year of ash * 20% of CaO) which is disposed of in dumps. To obtain that amount of calcium oxide (CaO), which does not participate in removal of sulphur dioxide ($SO_2$), assuming use of coal with a calorific value of 6000 kcal/kg, and assuming that the heat required for obtaining 1 tonne of calcium oxide (CaO) is equal to 980 000 kcal, it is calculated that obtaining 1 tonne of calcium oxide (CaO) requires approx. 163 kg of coal; hence the annual amounts of calcium oxide (CaO) disposed of in dumps represents a fuel consumption equal to 5216 tonnes/year (32 000 tonnes of CaO * 0.163 tonnes of coal).

Emission of the quota of $CO_2$, from combustion and process, resulting from the dissociation of $CaCO_3$ to give CaO that is then disposed of in dumps without contributing to desulphurization; (for example: in a thermal power station, with electric power equal to 350 MWh, with a coal-fired fluidized-bed boiler, for which the annual production of ash is approx. 160 000 tonnes/year, where said ash is characterized by a content of calcium oxide (CaO) of approx. 20 wt.% (average content found in analyses of the heavy ash produced in coal-fired fluidized-bed boilers), calculation gives an amount of calcium oxide (CaO) equal to 32 000 tonnes/year (160 000 tonnes/year of ash * 20% of CaO) that is disposed of in dumps. Production of this annual amount of calcium oxide requires, as already mentioned, approx. 5216 tonnes/year of fuel.

The $CO_2$ emitted to atmosphere, for obtaining the "ineffective" CaO, which does not participate in desulphurization, and goes directly into the waste ash, can be calculated from the following formula:

32 000 tonnes/year "ineffective" CaO * 0.78 (stoichiometric coefficient) =
**24 960 tonnes/year $CO_2$**

5216 tonnes/year coal * 30.961 (PCI) * 97.66 (FC) * 0.98 (FO) =
**15 456 tonnes/year $CO_2$**

Production of residues and ash resulting from combustion, which are also constituted of $CaCO_3$ and of "ineffective" CaO, i.e. CaO that has not participated in removal of $SO_2$. For example: in a thermal power station, with electric power equal to 350 MWh, with a coal-fired fluidized-bed boiler, the annual production of ash is approx. 160 000 tonnes/year, said ash being characterized by a $CaCO_3$ content of approx. 7 wt.%, and a CaO content of approx. 20 wt.% (average contents found in analyses of the heavy ash produced in coal-fired fluidized-bed boilers); calculation then gives an annual amount of $CaCO_3$ disposed of with the ash equal to 11 200 tonnes (160 000 tonnes/year ash * 7% $CaCO_3$), and an annual amount of CaO equal to 32 000 tonnes (160 000*20% CaO).

US4091076 discloses a method for removing SO2 from flue gases of boilers with fluidized-bed technology, said method comprising the direct introduction into the boiler of CaO impregnated within a porous and refractory support material.

US4555392 discloses a method for removing SO2 from a flue gas of boilers by introducing CaO (as Portland cement) having typically a particle size of 20-150 microns.

Further prior art is disclosed in WO 2009/017811.

It is therefore clear, despite the regular practice over many years of using $CaCO_3$ directly in the combustion chamber of fluidized-bed boilers, that a method is needed for removing $SO_2$ from flue gases that is more suitable in energy terms and provides better efficiency in absorption of $SO_2$.

## SUMMARY OF THE INVENTION

The present invention solves the aforementioned problems by means of a method for removing $SO_2$ from the flue gases of boilers with fluidized-bed technology, said method according to claim 1.

The method according to the invention therefore envisages the production of CaO in advance, which preferably should have a suitable granulometry, which must be assessed for each individual case based on site-specific requirements of the boiler in order to minimize the emission of $SO_2$ and at the same time minimize the presence of CaO in the ash.

With the method of the invention, surprisingly, an increase in specific absorption was found relative to the values obtained with direct use of $CaCO_3$ in a boiler. For example, 20 grams of CaO of granulometry between 200 and 300

μm, introduced into a fluidized-bed boiler with a diameter of 40 mm, where there is: a fluidization velocity equal to 0.75 m/s, a temperature of 850°C, a bed constituted of 150 grams of silica sand of grain size 0.9-1 mm, and an inlet concentration of $SO_2$ equal to 1800 ppm, can have, after a time elapsed since the moment of introduction equal to 18000 seconds, a specific capacity for absorption of $SO_2$ equal to 0.37 g($SO_2$)/g(CaO) [equal to 0.34 mol ($SO_2$)/mol(CaO)], versus 0.08 g($SO_2$)/g($CaCO_3$) [0.125 mol $SO_2$/mol $CaCO_3$] obtained, in the same experimental conditions, with introduction of 20 grams of $CaCO_3$.

The CaO previously prepared with a suitable granulometry then has a specific molar absorption of approx. 2.7 times relative to that observed with induced formation, in the boiler, of CaO starting from $CaCO_3$.

The present invention also offers other advantages, which are explained later.

DETAILED DESCRIPTION OF THE INVENTION

According to the invention, the granulometry of the CaO varies in the range from 0.001 to 500 μm; preferably from 0.01 to 400 μm; even more preferably from 0.1 to 300 μm.

Preferably, according to the invention, the CaO has, during operation, a specific absorption between 0.60 and 0.20 mol ($SO_2$)/mol(CaO); more preferably between 0.60 and 0.30 mol ($SO_2$)/mol(CaO).

The CaO to be used in fluidized-bed boilers for removing $SO_2$, according to the method of the invention, is prepared as follows:

a) Quarrying, crushing, and selection of limestone, essentially constituted of calcium carbonate ($CaCO_3$), to lump sizes suitable for subsequent calcination (for example: 40-100 mm in diameter);
b) Feeding the $CaCO_3$, prepared as in the preceding point, into suitable lime kilns (vertical or horizontal), in which the process of dissociation of $CaCO_3$ is controlled optimally at a temperature that can be from 850°C to 1100°C, for a residence time of the material in the kiln in the range from 12 to 24 hours.
c) The CaO, obtained as described in the preceding point, is discharged from the kiln and is ground in suitable mills (hammer mills or ball mills, etc.) and selected (screening) according to granulometric classes defined in relation to site-specific requirements of the power station that receives the material; in the present case the ideal granulometry, for each plant, will be defined according to a procedure that envisages adjustments, by successive approximations, of the granulometric distribution of the material to be introduced into the combustion chamber of the boiler. These adjustments can be carried out by introducing CaO directly, in the combustion chamber of the fluidized-bed boiler in operation, according to granulometric distributions to a first approximation, and, at the same time, measuring: the concentration of $SO_2$ at the outlet of the boiler chimney (which must show values below the legally stipulated limits), and the amount of residual CaO in the ash. In essence, the ideal granulometric curve, for a specific boiler, is the one that makes it possible to remove the largest amount of $SO_2$, resulting from combustion, at the same time minimizing or cancelling the amount of residual calcium oxide present in the ash resulting from said combustion.

Once the "ideal" granulometric curve of calcium oxide (CaO), described in the preceding point, is established, the regime of the procedure for removal of $SO_2$ is entered by direct introduction of CaO of suitable granulometry (according to the "ideal" granulometric curve as previously established) in the combustion chamber of the fluidized-bed boiler.

The invention, described in the preceding points, comprises, with respect to the procedure currently used, the following advantages:

- The waste (particles not complying with the "ideal" granulometric curve) resulting from the preparation of CaO, with particular reference to the grinding process (described above as point "c"), is immediately usable for the production of derivatives with high added value (for example $Ca(OH)_2$, a compound that is widely used in the building industry, for water purification, for soil stabilization, in agriculture for controlling soil pH);
- Introduction, in the fluidized-bed boiler, of a material that is thermodynamically inert and does not require, for reaction with $SO_2$, temperature-induced transformations, therefore without affecting the thermal efficiency of the system (in contrast, when using $CaCO_3$, the dissociation induced inside the combustion chamber of the boiler, by the production of CaO, comprises a subtraction of heat equal to 980 000 kcal per tonne of CaO produced, including what ends up in the waste ash);
- All the CaO introduced into the combustion chamber of the boiler is immediately available for reaction with $SO_2$ (in contrast, when using $CaCO_3$, there is dispersion of said material, which is volatilized, without being converted to CaO, by a percentage that amounts to 7 wt.% of the residual ash from combustion);
- No thermal stress is induced by the temperature present in the combustion chamber of the boiler, on the particles of CaO introduced there directly, which therefore do not undergo any change in mechanical characteristics, with drastic reduction (relative to the use of calcium carbonate) of the comminution processes induced by abrasion and impacts between particles, and the consequent greater persistence thereof in the system (for example, 20 grams

of CaO of granulometry between 200 and 300 μm, introduced into a fluidized-bed boiler with a diameter of 40 mm, where there is: a fluidization velocity equal to 0.75 m/s, a temperature of 850 °C, a bed constituted of 150 grams of silica sand of grain size 0.9-1 mm, and an inlet concentration of $SO_2$ equal to 1800 ppm, can have, after a time elapsed since the moment of introduction equal to 20 minutes, a rate of elutriation (removal induced by the streams present inside the boiler) of approx. 0.003 g/min, compared with 0.03 g/min obtained in the same experimental conditions with introduction of 20 grams of $CaCO_3$);

- Increase, relative to the use of $CaCO_3$, in the specific absorption (amount of $SO_2$ absorbed per gram of sorbent fed into the combustion chamber of the boiler), with consequent reduction of the consumption of sorbent material;
- Reduction of the ash discharged from the boiler, relative to that produced when using calcium carbonate ($CaCO_3$), since the better specific absorption and lower susceptibility to crushing of the particles of CaO represents a drastic reduction of material that ends up in the ash without binding to the $SO_2$;
- Optimization in the procedures for thermodynamic management and efficiency of fluidized-bed boilers. The smaller amount of sorbent that is currently used (calcium carbonate) produces a reduction of the volumes occupied by it inside the combustion chamber, with improvement of heat exchange of the fuel with the surroundings;
- Reduction in emissions of $CO_2$ defined as "ineffective". Control in the preparation of the sorbent CaO makes it possible to optimize and rationalize the emission of $CO_2$ emitted for producing it. Currently the production of calcium oxide, which takes place in a manner that is induced and uncontrolled inside the combustion chamber of the fluidized-bed boiler, produces a sorbent CaO, 20% of which is lost in the ash without contributing to the absorption of $SO_2$, although producing process and combustion $CO_2$.

## Claims

**1.** Method for removing $SO_2$ from flue gases of boilers with fluidized-bed technology, said method comprising the direct introduction of CaO into the boiler wherein said CaO has a granulometry between 0.001 and 500 μm; wherein said method comprises the production of CaO and said CaO is prepared as follows:

a. Quarrying, crushing, and selection of limestone, essentially constituted of calcium carbonate ($CaCO_3$), according to lump sizes suitable for subsequent calcination;
b. Introduction of $CaCO_3$, prepared as in the preceding point, in a lime kiln, in which the process of dissociation of $CaCO_3$ is controlled to a temperature that can be from 850°C to 1100°C, for a residence time of the material in the kiln in the range from 12 to 24 hours.
c. The CaO, obtained as described in the preceding point, is discharged from the kiln and is ground in suitable mills and is selected according to granulometric classes defined in relation to the site-specific requirements of the power station that receives the material; in the present case, the ideal granulometry, for any plant, will be defined according to a procedure that envisages adjustments, by successive approximations, of the granulometric distribution of the material to be introduced into the combustion chamber of the boiler that makes it possible to remove most of the $SO_2$ resulting from combustion, at the same time minimizing or cancelling the amount of residual calcium oxide present in the ash that results from said combustion.

**2.** Method according to Claim 1, **characterized in that** the CaO has a granulometry between 0.01 and 400 μm.

**3.** Method according to Claim 2, **characterized in that** the CaO has a granulometry between 0.1 and 300 μm.

**4.** Method according to any one of Claims 1-3, **characterized in that** the CaO has, during operation, a specific absorption between 0.60 and 0.20 mol ($SO_2$)/mol(CaO).

**5.** Method according to Claim 4, **characterized in that** the specific absorption is between 0.60 and 0.30 mol ($SO_2$)/mol(CaO).

**6.** Method according to Claim 1, **characterized in that** the $CaCO_3$ has lumps with a diameter of 40-100 mm.

**7.** Method according to Claim 1, **characterized in that** the calcining kiln is vertical or horizontal.

**8.** Method according to Claim 1, **characterized in that** the CaO is ground in hammer mills or ball mills and then is selected by screening for the desired granulometry.

## Patentansprüche

1. Verfahren zum Entfernen von $SO_2$ aus Rauchgasen von Kesseln mit Wirbelschichttechnologie, wobei das Verfahren die direkte Einführung von CaO in den Kessel umfasst, wobei das CaO eine Korngrößenverteilung zwischen 0,001 und 500 µm aufweist; wobei das Verfahren die Produktion von CaO umfasst und das CaO wie folgt hergestellt wird:

    a. Brechen, Zerkleinern und Auswählen von Kalkstein, der im Wesentlichen aus Kalziumkarbonat ($CaCO_3$) besteht, gemäß den für die anschließende Kalzinierung geeigneten Klumpengrößen;
    b. Einführen von $CaCO_3$, das wie im vorstehenden Punkt hergestellt ist, in einen Kalkofen, in dem der Prozess der Dissoziation von $CaCO_3$ auf eine Temperatur gesteuert wird, die von 850°C bis 1100°C betragen kann, für eine Verweilzeit des Materials im Ofen im Bereich von 12 bis 24 Stunden.
    c. das CaO, das wie im vorigen Punkt beschrieben erhalten ist, wird aus dem Ofen ausgetragen und in geeigneten Mühlen gemahlen und nach granulometrischen Klassen ausgewählt, die in Bezug auf die standortspezifischen Anforderungen des Kraftwerks, das das Material erhält, definiert sind; wobei im vorliegenden Fall die ideale Korngrößenverteilung für jede Anlage nach einer Vorgehensweise definiert wird, die Anpassungen der granulometrischen Verteilung des in die Brennkammer des Kessels einzubringenden Materials durch aufeinanderfolgende Annäherungen vorsieht, die es ermöglicht, den größten Teil des bei der Verbrennung entstehenden $SO_2$ zu entfernen und gleichzeitig die Menge an Restkalziumoxid in der Asche, die bei der Verbrennung entsteht, zu minimieren oder aufzuheben.

2. Verfahren nach Anspruch 1, **dadurch gekennzeichnet, dass** das CaO eine Korngrößenverteilung zwischen 0,01 und 400 µm aufweist.

3. Verfahren nach Anspruch 2, **dadurch gekennzeichnet, dass** das CaO eine Korngrößenverteilung zwischen 0,1 und 300 µm aufweist.

4. Verfahren nach einem der Ansprüche 1-3, **dadurch gekennzeichnet, dass** das CaO während des Betriebs eine spezifische Absorption zwischen 0,60 und 0,20 mol ($SO_2$) / mol (CaO) aufweist.

5. Verfahren nach Anspruch 4, **dadurch gekennzeichnet, dass** die spezifische Absorption zwischen 0,60 und 0,30 mol ($SO_2$) / mol (CaO) liegt.

6. Verfahren nach Anspruch 1, **dadurch gekennzeichnet, dass** das $CaCO_3$ Klumpen mit einem Durchmesser von 40 - 100 mm aufweist.

7. Verfahren nach Anspruch 1, **dadurch gekennzeichnet, dass** der Kalzinierungsofen vertikal oder horizontal ist.

8. Verfahren nach Anspruch 1, **dadurch gekennzeichnet, dass** das CaO in Hammermühlen oder Kugelmühlen gemahlen und dann durch Siebung für die gewünschte Korngrößenverteilung ausgewählt wird.

## Revendications

1. Procédé d'élimination de $SO_2$ depuis des gaz de carnau de chaudières avec une technologie à lit fluidisé, ledit procédé comprenant l'introduction directe de CaO dans la chaudière, dans lequel ledit CaO a une granulométrie entre 0,001 et 500 µm ; dans lequel ledit procédé comprend la production de CaO et ledit CaO est préparé comme suit :

    a. l'extraction, le broyage, et la sélection de pierre à chaux, constituée essentiellement de carbonate de calcium ($CaCO_3$), selon des tailles de morceau appropriées pour une calcination ultérieure ;
    b. l'introduction de $CaCO_3$, préparé comme dans le point précédent, dans un four à chaux, dans lequel le processus de dissociation de $CaCO_3$ est commandé à une température qui peut aller de 850 °C à 1100 °C, pendant un temps de séjour du matériau dans le four dans la plage de 12 à 24 heures,
    c. le CaO, obtenu comme décrit dans le point précédent, est sorti du four et est broyé dans des broyeurs appropriés et est sélectionné selon des catégories granulométriques définies en lien avec les exigences spécifiques au site de la centrale qui reçoit le matériau ; dans le présent cas, la granulométrie idéale, pour n'importe quelle installation, sera définie selon une procédure qui envisage des ajustements, par des approximations successives, de la distribution granulométrique du matériau à introduire dans la chambre de combustion de la

chaudière qui permet d'éliminer la majeure partie du $SO_2$ résultant de la combustion, tout en minimisant ou annulant en même temps la quantité d'oxyde de calcium résiduel présent dans la cendre qui résulte de ladite combustion.

**2.** Procédé selon la revendication 1, **caractérisé en ce que** le CaO a une granulométrie entre 0,01 et 400 $\mu$m.

**3.** Procédé selon la revendication 2, **caractérisé en ce que** le CaO a une granulométrie entre 0,1 et 300 $\mu$m.

**4.** Procédé selon l'une quelconque des revendications 1 à 3, **caractérisé en ce que** le CaO a, pendant le fonctionnement, une absorption spécifique entre 0,60 et 0,20 mol ($SO_2$)/mol(CaO).

**5.** Procédé selon la revendication 4, **caractérisé en ce que** l'absorption spécifique est entre 0,60 et 0,30 mol ($SO_2$)/mol(CaO).

**6.** Procédé selon la revendication 1, **caractérisé en ce que** le $CaCO_3$ a des morceaux d'un diamètre de 40 à 100 mm.

**7.** Procédé selon la revendication 1, **caractérisé en ce que** le four de calcination est vertical ou horizontal.

**8.** Procédé selon la revendication 1, **caractérisé en ce que** le CaO est broyé dans des broyeurs à marteaux ou des broyeurs à boulets puis est sélectionné par criblage pour la granulométrie souhaitée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4091076 A
- US 4555392 A
- WO 2009017811 A